# EUROPEAN PATENT APPLICATION

(11) **EP 4 578 973 A1**
(43) Date of publication of application: **02.07.2025**
(21) Application number: 24223400.3
(22) Date of filing: 27.12.2024
(51) Int. Cl.: C22C 21/02, B60J 5/04, C22F 1/043

(54) **6XXX SERIES ALUMINUM ALLOY SHEET FOR DOOR INNER PANEL, PREPARATION METHOD THEREFOR AND APPLICATION THEREOF**

(30) Priority: 27.12.2023 CN 202311820671
(71) Applicant: Chinalco Materials Application Research Institution Co., Ltd., Beijing 102209 (CN); Chinalco Advanced Manufacturing Co., Ltd., Chongqing 400039 (CN)
(72) Inventor: SHI, Xiaocheng, Beijing, 102209 (CN); ZHAO, Pizhi, Beijing, 102209 (CN); ZHAO, Jingwei, Beijing, 102209 (CN); LI, Xiulei, Beijing, 102209 (CN); SUN, Zhongguo, Beijing, 102209 (CN); CHEN, Kaixin, Beijing, 102209 (CN); QI, Peng, Beijing, 102209 (CN); LIU, Yungang, Beijing, 102209 (CN); WANG, Nengjun, Beijing, 102209 (CN); DING, Liqun, Beijing, 102209 (CN); FAN, Ronghui, Beijing, 102209 (CN)
(74) Representative: Studio Torta S.p.A.

(57) **Abstract**

Provided is a 6XXX series aluminum alloy sheet for a door inner panel, a preparation method therefor and an application thereof. The sheet includes, by weight percentage, 0.9-1.85% of Si, 0.15-0.4% of Fe, 0.05-0.3% of Cu, 0.05-0.15% of Mn, 0.2-0.9% of Mg, 0.01-0.03% of Ti, 0.1-0.2% of Cr, and an atomic ratio of Si to Mg is (0.9-7.9):1. The preparation method includes: mixing raw materials, and sequentially carrying out smelting and casting, homogenization-cooling and heat preservation integrated treatment, hot rolling, primary cold rolling, intermediate annealing, secondary cold rolling, solid solution, straightening, and pre-aging. The sheet of the present disclosure has a high work hardening index, small anisotropy, a high plane strain limit, good stability at room temperature and high baking yield strength, which has good mechanical properties and forming properties, and is suitable for being applied to stamping forming of door inner panels of automobiles.

## Description

### Technical Field

The present disclosure relates to the technical fields of manufacturing and application of aluminum alloy automobile sheets, in particular to a 6XXX series aluminum alloy sheet for a door inner panel, a preparation method therefor and an application thereof.

### Background

With development of the automobile industry, three major problems of energy, environment and safety have become increasingly obvious, and energy shortage and environmental pollution have become main causes affecting sustainable development of the automobile industry. Reducing the body weight to decrease energy consumption and reduce exhaust emissions has become an important way to improve the competitiveness of automobile companies. Aluminum alloy sheets, due to light weight, high specific strength, excellent comprehensive performance, easiness in recycling, etc., have been considered as ideal materials for weight reduction of automobiles.

Door inner panels have complex structures, which require the alloy sheets to have good stamping formability. Meanwhile, as main installation positions of door accessories, the alloy sheets are required to have sufficient strength and stiffness, that is, sufficient baking yield strength, in which the requirement for stamping formability is a greatest challenge for the door inner panels. At present, 6014 and 6016 aluminum alloys used for automobile sheets have insufficient stamping formability, which are difficult to meet forming needs of complex parts such as the door inner panels. Meanwhile, 6XXX series aluminum alloys have the phenomenon of natural aging, and that is to say, mechanical properties of the alloys are changed with the prolonging of parking time, especially the yield strength is increased, which is unfavorable to stamping forming. Thus, the 6XXX series aluminum alloys is mainly used for door outer panels, and 5XXX series aluminum alloys is mainly used for door inner panels of automobiles at present, respectively, which are connected together for use by complex processes, such as bonding and riveting. However, since the aluminum alloy series of the door inner panels and door outer panels of automobiles are different and difficult to disassemble and sort in subsequent recovery processes, circular recycling of automobile parts is affected.

In recent years, few studies have been conducted on development of 6XXX series aluminum alloy sheets for door inner panels of automobiles. Patent CN105378125B disclosed a sheet made of an aluminum alloy for a motor vehicle body structure. Alloy components included 0.15-0.50% of element Si and 1.0-1.5% of element Mn, the content of element Mg was limited to the content of impurities (less than 0.05%), and the sheet belonged to an aluminum-manganese series alloy system. A processing path included melting casting, homogenization, hot rolling, cold rolling, annealing, stretching flattening, and chemical pickling. Patent CN108136730B disclosed an eclectic motor vehicle body structure component with excellent mechanical strength and collision behaviors. Alloy components included 0.60-0.85% of element Si and 0.50-1.00% of element Mg, and belonged to an excessive Mg system. Patent CN114829644A disclosed an improved method of manufacturing a structural component for a motor vehicle body. Alloy components included 0.75-1.10% of element Si, 0.5-0.8% of element Cu and 0.75-1% of element Mg, and a content ratio of element Si to element Mg was basically maintained at 1:1.

However, all of the above-mentioned solutions are mainly focused on mechanical properties, such as yield strength, uniaxial tensile elongation and hole expansion ratio, and have made improvements in component and preparation method according to the above-mentioned properties, but forming properties still need to be improved.

### SUMMARY

The main purpose of the present disclosure is to provide a 6XXX series aluminum alloy sheet for a door inner panel, a preparation method therefor and an application thereof, aiming to solve the problem that forming properties and mechanical properties of 6XXX series aluminum alloy sheets for door inner panels in the prior art cannot be balanced.

In order to achieve the above purpose, according to an aspect of the present disclosure, a preparation method for a 6XXX series aluminum alloy sheet for a door inner panel is provided. Components of the 6XXX series aluminum alloy sheet for a door inner panel include, by weight percentage: 0.9-1.85% of Si, 0.15-0.4% of Fe, 0.05-0.3% of Cu, 0.05-0.15% of Mn, 0.2-0.9% of Mg, 0.01-0.03% of Ti, 0.1-0.2% of Cr, and equal to or less than 0.15% of inevitable impurities, wherein a content of each inevitable impurity is ≤0.05%, the balance is Al, and an atomic ratio of Si to Mg is (0.9-7.9):1. The preparation method includes the following steps: step S1, mixing raw materials of the 6XXX series aluminum alloy sheet for a door inner panel according to component proportions, and carrying out smelting and casting to obtain an aluminum alloy ingot; step S2, subjecting the aluminum alloy ingot to homogenization-cooling and heat preservation integrated treatment to obtain an integrated ingot; step S3, removing the integrated ingot from a furnace, and carrying out hot rolling directly to obtain a hot-rolled material; step S4, sequentially subjecting the hot-rolled material to primary cold rolling, intermediate annealing, secondary cold rolling and optional texturing rolling to obtain a cold-rolled material; step S5, sequentially subjecting the cold-rolled material to solid solution treatment, straightening treatment and pre-aging treatment to obtain a semi-finished sheet; and step S6, subjecting the semi-finished sheet to optional surface treatment to obtain the 6XXX series aluminum alloy sheet for a door inner panel.

Further, the components of the 6XXX series aluminum alloy sheet for a door inner panel include, by weight percentage: 1.3-1.55% of Si, 0.17-0.18% of Fe, 0.05-0.22% of Cu, 0.1-0.12% of Mn, 0.39-0.66% of Mg, 0.02-0.03% of Ti, 0.1-0.2% of Cr, and equal to or less than 0.15% of inevitable impurities, wherein the content of each inevitable impurity is ≤0.05%, the balance is Al, and the atomic ratio of Si to Mg is (1.7-3.4):1.

Further, the components of the 6XXX series aluminum alloy sheet for a door inner panel include, by weight percentage: 1.55-1.85% of Si, equal to or less than 0.3% of Fe, 0.05-0.3% of Cu, 0.05-0.15% of Mn, 0.2-0.9% of Mg, 0.01-0.03% of Ti, and equal to or less than 0.15% of inevitable impurities, wherein the content of each inevitable impurity is ≤0.05%, the balance is Al, and the atomic ratio of Si to Mg is (1.5-7.9):1. The preparation method includes the following steps: step S1, mixing the raw materials of the 6XXX series aluminum alloy sheet for a door inner panel according to the component proportions, and carrying out the smelting and the casting to obtain the aluminum alloy ingot; step S2, subjecting the aluminum alloy ingot to the homogenization-cooling and heat preservation integrated treatment to obtain the integrated ingot; step S3, removing the integrated ingot from the furnace, and carrying out the hot rolling directly to obtain the hot-rolled material; step S4, sequentially subjecting the hot-rolled material to the primary cold rolling, the intermediate annealing and the secondary cold rolling to obtain the cold-rolled material; and step S5, sequentially subjecting the cold-rolled material to the solid solution treatment, the straightening treatment and the pre-aging treatment to obtain the 6XXX series aluminum alloy sheet for a door inner panel.

Further, the components of the 6XXX series aluminum alloy sheet for a door inner panel include, by weight percentage: 1.60-1.80% of Si, 0.17-0.18% of Fe, 0.05-0.22% of Cu, 0.1-0.12% of Mn, 0.39-0.66% of Mg, 0.02-0.03% of Ti, and equal to or less than 0.15% of inevitable impurities, wherein the content of each inevitable impurity is ≤0.05%, the balance is Al, and the atomic ratio of Si to Mg is (2.1-4.0):1.

Further, a work hardening index n₍₁₀₋₂₀₎ of the 6XXX series aluminum alloy sheet for a door inner panel is ≥0.28, an anisotropy Δr₁₀ is ≤0.15, and a plane strain limit FLCₘᵢₙ is ≥0.2.

Further, a 180-day stability at room temperature of the 6XXX series aluminum alloy sheet for a door inner panel is ≤15 MPa, and a baking yield strength R_{p0.2}(BH) is ≥250 MPa.

Further, an average grain size of the 6XXX series aluminum alloy sheet for a door inner panel is ≤35 µm; and/or an elongation A₅₀ of the 6XXX series aluminum alloy sheet for a door inner panel is ≥28%.

Further, a surface roughness Rₐ of the 6XXX series aluminum alloy sheet for a door inner panel is 0.7-0.9 µm, and a surface roughness R_{pc} is 70-90 cm⁻¹; and/or an oil coating amount of the 6XXX series aluminum alloy sheet for a door inner panel is 0.9-1.1 g/m²; and/or a surface friction coefficient of the 6XXX series aluminum alloy sheet for a door inner panel in the direction of 0° and 90° under the condition of 4,500 N is 0.07-0.11.

Further, in step S2, the homogenization-cooling and heat preservation integrated treatment includes homogenizing heat treatment and cooling and heat preservation treatment that are sequentially carried out, wherein a temperature of the homogenizing heat treatment is 540-570°C, a time is 4-25 h, and a heating rate is 20-80°C/h; and/or a temperature of the cooling and heat preservation treatment is 500-530°C, and a time is 1.5-18 h.

Further, in step S3, an initial rolling temperature of the hot rolling is 490-530°C, and a finish rolling temperature is 240-360°C; and/or a thickness of the hot-rolled material is 4-8 mm.

Further, in step S4, a temperature of the intermediate annealing is 470-500°C, and a time is 15-60 s; and/or a reduction rate of the primary cold rolling is 15-60%, and a reduction rate of the secondary cold rolling is 62-82%; and/or a thickness of the cold-rolled material is 0.8-2.5 mm.

Further, in step S5, a temperature of the solid solution treatment is 510-560°C, and a time is 10-150 s; and/or a straightening amount of the straightening treatment is 0.3-1.0%; and/or a temperature of the pre-aging treatment is 60-100°C, and a time is 2-10 h.

Further, in step S3, a single-pass reduction of the hot rolling is 45-75 mm; and/or in step S4, a reduction rate of the primary cold rolling is 15-60%, and a reduction rate of the secondary cold rolling is 45-75%; and/or a reduction of the texturing rolling is 0.01-0.03 mm, and a rolling rate is 1.0-2.0 m/s; and/or in step S5, the temperature of the solid solution treatment is 540-560°C, and the time is 2-150 s; and/or the pre-aging treatment includes isothermal pre-aging treatment and cooling pre-aging treatment that are sequentially carried out, a temperature of the isothermal pre-aging treatment is 70-100°C, and a time is 2-10 h; and a winding temperature of the cooling pre-aging treatment is 75-95°C, and a cooling rate is ≤3°C/h.

According to another aspect of the present disclosure, a 6XXX series aluminum alloy sheet for a door inner panel is provided, which is obtained by the preparation method of the present disclosure.

According to another aspect of the present disclosure, an application of the 6XXX series aluminum alloy sheet for a door inner panel of the present disclosure in the field of door inner panels of automobiles is provided.

The creativity of the present disclosure is embodied in at least the following aspects:
(1) The alloy components of the present disclosure belong to an excessive Si system, and the density of a dispersed phase is relatively high, such that deformation can be more uniform through a cross slip method, thereby increasing the work hardening index of the alloy sheet and achieving high formability of a 6XXX series aluminum alloy. Meanwhile, the excessive Si system is conducive to improving the stability at room temperature of the alloy sheet. The stability at room temperature (180 d-7 d) of the present disclosure is optimal and is ≤15 MPa, which reduces the fluctuation of mechanical properties of the alloy sheet within a supply cycle and is conducive to stamping forming stability.
(2) In the preparation method of the present disclosure, by designing a homogenization-cooling and heat preservation integrated treatment process, a cooling and heat preservation process is directly transited from a homogenizing heat treatment process, such that a cooling process of homogenizing heat treatment and a heating process of secondary heat preservation are eliminated, precipitation of Mg₂Si in the cooling process of homogenizing heat treatment can be avoided, and adverse impacts on subsequent processing and heat treatment processes are removed. Moreover, the heating process of secondary heat preservation is not required, which can greatly improve the production efficiency and reduce the production cost. Meanwhile, by increasing an intermediate annealing process between the primary cold rolling and the secondary cold rolling in the present disclosure, the sheet structure undergoes recrystallization during the intermediate annealing, grains with a fibrous structure generated by the primary cold rolling are transitioned into elongated recrystallized grains, and rolling texturing is transitioned into recrystallization texturing, such that improvement of properties of the finished sheet is facilitated by regulating the microstructure and texture.

The progressiveness of the present disclosure is embodied in at least the following respects:
(1) In the present disclosure, a solute-cluster ratio is regulated by designing the alloy components and carrying out the solid solution and pre-aging to achieve increase of the work hardening index of the alloy sheet, the alloy structure and texture components are regulated by a hot rolling process and a cold rolling process to achieve decrease of the anisotropy, and the grain size and texture components are controlled by the intermediate annealing and the cold rolling process to achieve increase of the plane strain limit. Through innovative design of the alloy components and precise control of a processing technology, the work hardening index n₍₁₀₋₂₀₎ of the prepared alloy sheet is ≥0.28, the anisotropy Δr₁₀ is ≤0.15, the plane strain limit FLCₘᵢₙ is ≥0.2, and the stamping formability is comprehensively improved than existing 6XXX series aluminum alloy automobile sheets such as 6014 and 6016. Meanwhile, on the basis of improving the stamping formability of the alloy sheet in the present disclosure, the baking yield strength R_{p0.2}(BH) is ≥250 MPa, which ensures sufficient strength and stiffness after baking, meets installation requirements of door accessories, achieves balance and improvement of comprehensive performance of the novel 6XXX series aluminum alloy sheet, and fully meets needs of application scenarios such as door inner panels of automobiles.
(2) In the present disclosure, a 6XXX series aluminum alloy is used to replace a conventional 5XXX series aluminum alloy in preparation of door inner panels of automobiles, thereby achieving the consistency of the alloy series of door inner panels and door outer panels and facilitating circular recycling. The energy consumption of circular recycling is only 5-10% of that of primary aluminum manufacturing, and carbon dioxide emissions are also only 5% of that of primary aluminum manufacturing, which can greatly decrease energy consumption and reduce environmental pollution.

In summary, the 6XXX series aluminum alloy sheet of the present disclosure has good forming properties, such as high work hardening index, small anisotropy and high plane strain limit, has good mechanical properties, such as good stability at room temperature and high baking yield strength, and is suitable for being applied to stamping forming of door inner panels of automobiles, which is conducive to achieving the consistency and circular recycling of the alloy series of door inner panels and door outer panels, and can greatly decrease energy consumption, reduce environmental pollution and promote high-quality development of the automobile industry.

### Brief Description of the Drawings

Drawings attached to the specification that form a part of the present disclosure are used to provide further understanding of the present disclosure, and schematic embodiments of the present disclosure and description thereof are used to interpret the present disclosure and are not intended to constitute improper limitations to the present disclosure. In the drawings:

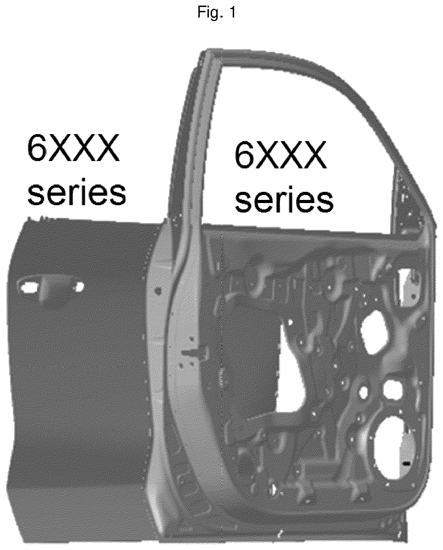

Fig. 1 shows an application diagram of a 6XXX series aluminum alloy sheet for a door inner panel according to an embodiment of the present disclosure in the field of door inner panels of automobiles.

### Detailed Description of the Embodiments

It should be noted that embodiments in the present disclosure and features in the embodiments can be combined with each other without conflict. The present disclosure is described in detail below with reference to the drawings and in conjunction with the embodiments.

It should be noted that a preparation method of the present disclosure can also be used for preparation of automobile panel parts to obtain a 6XXX series aluminum alloy sheet for automobile panel parts with good forming properties, such as high work hardening index, small anisotropy and high plane strain limit, and with good mechanical properties, such as good stability at room temperature and high baking yield strength.

Explanations of terms:
Weight percentage: A percentage of a mass (weight) of an alloy component to a total mass.
Atomic ratio: A number ratio of metal atoms in an alloy.
Work hardening index: The index is defined by a true stress-true strain relationship and refers to the power exponent n in a relation formula of true stress S and true strain ε during forming of a metal sheet, and the relation formula is as follows: S=Kεⁿ, wherein K in the formula is a strength coefficient and does not need to be a specific numerical value since it will be omitted after taking a logarithm; and n₍₁₀₋₂₀₎ is a calculation result when the true strain ε is 10-20%.
Anisotropy: A plastic strain ratio r value of a metal sheet refers to a ratio (ε_{w}/εₜ) of a strain value on the width and a strain value on the thickness of a material during stamping forming; anisotropy Δr=(r₀+r₉₀-2r₄₅)÷2, wherein r₀, r₉₀ and r₄₅ are r values in the direction of 0°, 45° and 90° relative to a rolling direction (RD), respectively; and Δr₁₀ is a calculation result when the strain value is 10%.
Plane strain limit: A forming limit curve (FLC) mainly describes a maximum index of a sheet metal deformed at different strain paths; and the plane strain limit FLCₘᵢₙ refers to a lowest point on the forming limit curve (FLC), which is generally near a plane strain in a deformation path.
Stability at room temperature: A 6XXX series aluminum alloy has the phenomenon of natural aging with the prolonging of time, the yield strength is generally increased, and the automobile industry usually adopts a yield strength difference of a material parked for 180 days and 7 days after heat treatment under room temperature conditions to evaluate the stability of the material, that is, stability at room temperature (180 d-7 d) or 180-day stability at room temperature.
Baking yield strength: The yield strength of an alloy sheet measured after pre-stretching by 2% and baking at 185°C for 20 min.
Surface roughness Rₐ: An arithmetic mean of absolute profile deviations within a sampling length L.
Surface roughness R_{pc}: A number of roughness profile elements that continuously pass through a specified upper profile cutoff line and a lower profile cutoff line within a unit length.

As mentioned in the background of the present disclosure, the prior art has the problem that forming properties and mechanical properties of 6XXX series aluminum alloy sheets for door inner panels cannot be balanced. In order to solve the above problem, a typical embodiment of the present disclosure provides a preparation method for a 6XXX series aluminum alloy sheet for a door inner panel. Components of the 6XXX series aluminum alloy sheet for a door inner panel include, by weight percentage: 0.9-1.85% of Si, 0.15-0.4% of Fe, 0.05-0.3% of Cu, 0.05-0.15% of Mn, 0.2-0.9% of Mg, 0.01-0.03% of Ti, 0.1-0.2% of Cr, and equal to or less than 0.15% of inevitable impurities, wherein a content of each inevitable impurity is ≤0.05%, the balance is Al, and an atomic ratio of Si to Mg is (0.9-7.9):1. The preparation method includes the following steps: step S1, mixing raw materials of the 6XXX series aluminum alloy sheet for a door inner panel according to component proportions, and carrying out smelting and casting to obtain an aluminum alloy ingot; step S2, subjecting the aluminum alloy ingot to homogenization-cooling and heat preservation integrated treatment to obtain an integrated ingot; step S3, removing the integrated ingot from a furnace, and carrying out hot rolling directly to obtain a hot-rolled material; step S4, sequentially subjecting the hot-rolled material to primary cold rolling, intermediate annealing, secondary cold rolling and optional texturing rolling to obtain a cold-rolled material; step S5, sequentially subjecting the cold-rolled material to solid solution treatment, straightening treatment and pre-aging treatment to obtain a semi-finished sheet; and step S6, subjecting the semi-finished sheet to optional surface treatment to obtain the 6XXX series aluminum alloy sheet for a door inner panel.

The atomic ratio of Si to Mg in the alloy components of the present disclosure is (0.9-7.9):1, the alloy sheet belongs to an excessive Si system, and the density of a dispersed phase is relatively high, such that deformation can be more uniform by a cross slip method, thereby increasing the work hardening index of the alloy sheet and achieving high formability of a 6XXX series aluminum alloy. Meanwhile, the excessive Si system is conducive to improving the stability at room temperature of the alloy sheet. The stability at room temperature (180 d-7 d) of the present disclosure is optimal and is ≤15 MPa, which reduces the fluctuation of mechanical properties of the alloy sheet within a supply cycle and is conducive to stamping forming stability.

The content of element Fe in the alloy components of the present disclosure is 0.15-0.4%. On the one hand, a certain number of an AIFeMnSi phase can be formed to serve as nucleation particles in a recrystallization process, thereby fully exerting a PSN mechanism, increasing the random texture and improving the uniformity of the alloy material. The anisotropy Δr₁₀ in the present disclosure is ≤0.15. On the other hand, considering circular recycling of automobile parts in the future, increase of the content of element Fe will decrease the formability of the alloy material. It is determined through research in the present disclosure that the content of element Fe is in a range of 0.15-0.4%.

By adding an appropriate amount of element Cu, precipitation of a β" phase of an Al-Mg-Si alloy system can be promoted, and the age hardening performance of the material is improved. However, when the content of element Cu is too high, the initial yield strength of the alloy sheet is increased, the work hardening index is decreased slightly, and the stamping formability of the alloy sheet is decreased slightly. It is determined through research in the present disclosure that the content of element Cu is in a range of 0.05-0.3%.

On the one hand, element Mn promotes precipitation of an Al₆Mn dispersed phase in the homogenization process, and pins dislocations and subgrain boundaries in a hot rolling process to inhibit recrystallization and play a role of refining grains. With a genetic effect of grains, grains of the finished sheet are refined, thereby increasing the elongation of the alloy material. On the other hand, the added element Mn can form an AIFeMnSi phase with element Fe, and the phase can be dissolved and spheroidized in the homogenization process, thereby reducing adverse impacts of element Fe. Combined with the controlled range of element Fe, it is determined through research in the present disclosure that the content of element Mn is in a range of 0.05-0.15%.

Element Cr has similar roles to element Mn. On the one hand, the element promotes precipitation of an Al₇Cr dispersed phase in the homogenization process, and pins dislocations and subgrain boundaries in a hot rolling process to inhibit recrystallization and play a role of refining grains. With a genetic effect of grains, grains of the finished sheet are refined, thereby increasing the elongation of the alloy material. On the other hand, the added element Cr can form an AIFe(CrMn)Si phase with elements Mn and Fe, and the phase can be dissolved and spheroidized in the homogenization process, thereby reducing adverse impacts of element Fe. Moreover, an effect of combined use of Cr and Mn is obviously better than that of separately adding Cr or Mn. Combined with the controlled ranges of elements Mn and Fe, it is determined through research in the present disclosure that the content of element Cr is in a range of 0.1-0.2%.

Element Ti mainly forms Al₃Ti in the melting and casting processes, which can serve as nucleation particles to refine grains. With a genetic effect of grains, grains of the finished sheet are refined, thereby increasing the elongation of the alloy material. On the other hand, the refined grains can refine a second phase (intermetallic compound), and the second phase is broken in the hot rolling process, such that the size of the second phase of the finished sheet is relatively small, and the comprehensive performance of the alloy material can be improved. However, when the content of element Ti is too high, a coarse Ti-containing compound is generated during the melting and casting, which cannot be eliminated in the homogenization and hot rolling processes, resulting in adverse impacts on properties of the alloy. It is determined through research in the present disclosure that the content of element Ti is in a range of 0.01-0.03%.

In the preparation method of the present disclosure, by designing a homogenization-cooling and heat preservation integrated treatment process, a cooling and heat preservation process is directly transited from a homogenizing heat treatment process, such that a cooling process of homogenizing heat treatment and a heating process of secondary heat preservation are eliminated, precipitation of Mg₂Si in the cooling process of homogenizing heat treatment can be avoided, and adverse impacts on subsequent processing and heat treatment processes are removed. Moreover, the heating process of secondary heat preservation is not required, which can greatly improve the production efficiency and reduce the production cost.

Meanwhile, by increasing an intermediate annealing process between the primary cold rolling and the secondary cold rolling in the present disclosure, the sheet structure undergoes recrystallization during the intermediate annealing, grains with a fibrous structure generated by the primary cold rolling are transitioned into elongated recrystallized grains, and rolling texturing is transitioned into recrystallization texturing, such that improvement of properties of the finished sheet is facilitated by regulating the microstructure and texture.

In summary, the 6XXX series aluminum alloy sheet of the present disclosure has good forming properties, such as high work hardening index, small anisotropy, high plane strain limit, high elongation and moderate surface friction coefficient, has good mechanical properties, such as good stability at room temperature and high baking yield strength, and is suitable for being applied to stamping forming of door inner panels of automobiles, which is conducive to achieving the consistency and circular recycling of the alloy series of door inner panels and door outer panels, and can greatly decrease energy consumption, reduce environmental pollution and promote high-quality development of the automobile industry.

In order to further improve the properties of the 6XXX series aluminum alloy sheet, in a preferred embodiment, the components of the 6XXX series aluminum alloy sheet for a door inner panel include, by weight percentage: 1.3-1.55% of Si, 0.17-0.18% of Fe, 0.05-0.22% of Cu, 0.1-0.12% of Mn, 0.39-0.66% of Mg, 0.02-0.03% of Ti, 0.1-0.2% of Cr, and equal to or less than 0.15% of inevitable impurities, wherein the content of each inevitable impurity is ≤0.05%, the balance is Al, and the atomic ratio of Si to Mg is (1.7-3.4):1.

In a preferred embodiment, the components of the 6XXX series aluminum alloy sheet for a door inner panel include, by weight percentage: 1.55-1.85% of Si, equal to or less than 0.3% of Fe, 0.05-0.3% of Cu, 0.05-0.15% of Mn, 0.2-0.9% of Mg, 0.01-0.03% of Ti, and equal to or less than 0.15% of inevitable impurities, wherein the content of each inevitable impurity is ≤0.05%, the balance is Al, and the atomic ratio of Si to Mg is (1.5-7.9):1.

The preparation method includes the following steps: step S1, mixing the raw materials of the 6XXX series aluminum alloy sheet for a door inner panel according to the component proportions, and carrying out the smelting and the casting to obtain the aluminum alloy ingot; step S2, subjecting the aluminum alloy ingot to the homogenization-cooling and heat preservation integrated treatment to obtain the integrated ingot; step S3, removing the integrated ingot from the furnace, and carrying out the hot rolling directly to obtain the hot-rolled material; step S4, sequentially subjecting the hot-rolled material to the primary cold rolling, the intermediate annealing and the secondary cold rolling to obtain the cold-rolled material; and step S5, sequentially subjecting the cold-rolled material to the solid solution treatment, the straightening treatment and the pre-aging treatment to obtain the 6XXX series aluminum alloy sheet for a door inner panel.

In the present disclosure, through innovative design of the alloy components and the preparation method for several new and old elements that are directly related to the stamping forming properties of a door inner panel, including work hardening index, anisotropy and plane strain limit, and that are related to the mechanical properties, including stability at room temperature and baking yield strength, under the premise of ensuring sufficient strength and stiffness of the alloy, increase of the work hardening index, decrease of the anisotropy and increase of the plane strain limit can be achieved, and the stamping forming properties of the prepared 6XXX series aluminum alloy sheet for a door inner panel are comprehensively improved than existing 6XXX series aluminum alloy automobile sheets such as 6014 and 6016. Meanwhile, installation requirements of door accessories can be met, the balance and improvement of the comprehensive performance of the aluminum alloy sheet are achieved, and needs of application scenarios such as door inner panels of automobiles are fully met.

The inventor unexpectedly finds in a research process that when the content of element Si is relatively low or the content of Mg in the alloy is higher than that of Si, the density of a dispersed phase in the alloy is relatively low, deformation is non-uniform, the work hardening index and plane strain limit of the alloy sheet are relatively low, the stamping formability of the alloy sheet is relatively poor, and the stability at room temperature is also relatively poor. Thus, it is designed that the content of Si is 1.55-1.85%, and the content of Mg is 0.2-0.9%. The maximum solid solubility of element Si in the aluminum alloy is 1.65%, and an intermetallic compound formed by elements Fe and Mn will consume a small amount of element Si, such that an upper limit of the content of element Si is designed to be 1.85% after comprehensive consideration. On the one hand, it can be avoided that massive elemental Si appearing in an ingot are unable to be completely redissolved in the homogenization process and result in adverse impacts on subsequent processing and heat treatment processes. On the other hand, it can be avoided that element Si being unable to be redissolved during the solid solution and existing as elemental Si leads to decrease of the stamping formability, stability at room temperature and baking yield strength of the alloy sheet. Thus, the alloy components are limited within the above specific ranges in the present disclosure.

In an actual preparation process, the raw materials of the 6XXX series aluminum alloy sheet for a door inner panel are first mixed according to the component proportions in the present disclosure, and the smelting and the casting are carried out to obtain the aluminum alloy ingot. Then, the aluminum alloy ingot is subjected to the homogenization-cooling and heat preservation integrated treatment to obtain the integrated ingot. A heat preservation process is directly transited from a homogenizing heat treatment process without cooling to room temperature, such that a cooling process of homogenizing heat treatment and a heating process of secondary heat preservation are eliminated, precipitation of Mg₂Si in the cooling process of homogenizing heat treatment can be avoided, and adverse impacts on subsequent processing and heat treatment processes are removed. Moreover, the heating process of secondary heat preservation is not required, which can greatly improve the production efficiency and reduce the production cost.

Then, the integrated ingot is removed from the furnace and subjected to the hot rolling directly to obtain the hot-rolled material, and the hot-rolled material is sequentially subjected to the primary cold rolling, the intermediate annealing and the secondary cold rolling to obtain the cold-rolled material. By increasing an intermediate annealing process between the primary cold rolling and the secondary cold rolling, the sheet structure undergoes recrystallization during the intermediate annealing, grains with a fibrous structure generated by the primary cold rolling are transitioned into elongated recrystallized grains, and rolling texturing is transitioned into recrystallization texturing, such that improvement of properties of the finished sheet is facilitated by regulating the microstructure and texture. Finally, the cold-rolled material is sequentially subjected to the solid solution treatment, the straightening treatment and the pre-aging treatment, such that the cold-rolled material undergoes recrystallization, Mg₂Si is redissolved, a stable cluster is precipitated, and the 6XXX series aluminum alloy sheet for a door inner panel that can balance the forming properties and the mechanical properties is obtained.

In summary, in the present disclosure, a solute-cluster ratio is regulated by designing the alloy components and carrying out the solid solution and pre-aging to achieve increase of the work hardening index of the alloy sheet, the alloy structure and texture components are regulated by a hot rolling process and a cold rolling process to achieve decrease of the anisotropy, and the grain size and texture components are controlled by the intermediate annealing and the cold rolling process to achieve increase of the plane strain limit. Through innovative design of the alloy components and precise control of a processing technology, the work hardening index n₍₁₀₋₂₀₎ of the prepared alloy sheet is ≥0.28, the anisotropy Δr₁₀ is ≤0.15, the plane strain limit FLCₘᵢₙ is ≥0.2, and the stamping formability is comprehensively improved than existing 6XXX series aluminum alloy automobile sheets such as 6014 and 6016. Meanwhile, on the basis of improving the stamping formability of the alloy sheet in the present disclosure, the baking yield strength R_{p0.2}(BH) is ≥250 MPa, which ensures sufficient strength and stiffness after baking, meets installation requirements of door accessories, achieves balance and improvement of comprehensive performance of the novel 6XXX series aluminum alloy sheet, and fully meets needs of application scenarios such as door inner panels of automobiles.

In order to further improve the forming properties, such as work hardening index, anisotropy and plane strain limit, of the 6XXX series aluminum alloy sheet, and to further improve the mechanical properties, such as stability at room temperature and baking yield strength, in a preferred embodiment, the components of the 6XXX series aluminum alloy sheet for a door inner panel include, by weight percentage: 1.60-1.80% of Si, 0.17-0.18% of Fe, 0.05-0.22% of Cu, 0.1-0.12% of Mn, 0.39-0.66% of Mg, 0.02-0.03% of Ti, and equal to or less than 0.15% of inevitable impurities, wherein the content of each inevitable impurity is ≤0.05%, the balance is Al, and the atomic ratio of Si to Mg is (2.1-4.0):1.

As mentioned above, the 6XXX series aluminum alloy sheet prepared in the present disclosure has good forming properties. Specifically, in a preferred embodiment, a work hardening index n₍₁₀₋₂₀₎ of the 6XXX series aluminum alloy sheet for a door inner panel is ≥0.28, such as 0.28-0.3, a anisotropy Δr₁₀ is ≤0.15, and a plane strain limit FLCₘᵢₙ is ≥0.2, such as 0.2-0.25.

As mentioned above, the 6XXX series aluminum alloy sheet prepared in the present disclosure has good mechanical properties. Specifically, in a preferred embodiment, a 180-day stability at room temperature of the 6XXX series aluminum alloy sheet for a door inner panel is ≤15 MPa, and a baking yield strength R_{p0.2}(BH) is ≥250 MPa, such as 250-280 MPa.

Based on similar reasons, in a preferred embodiment, an average grain size of the 6XXX series aluminum alloy sheet for a door inner panel is ≤35 µm; and/or an elongation A₅₀ of the 6XXX series aluminum alloy sheet for a door inner panel is ≥28%.

In a preferred embodiment, a surface roughness Rₐ of the 6XXX series aluminum alloy sheet for a door inner panel is 0.7-0.9 µm, and a surface roughness R_{pc} is 70-90 cm⁻¹; and/or an oil coating amount of the 6XXX series aluminum alloy sheet for a door inner panel is 0.9-1.1 g/m²; and/or a surface friction coefficient of the 6XXX series aluminum alloy sheet for a door inner panel in the direction of 0° and 90° under the condition of 4,500 N is 0.07-0.11.

In the present disclosure, the surface roughness Rₐ of the alloy material is precisely controlled to be 0.7-0.9 µm, and the surface roughness R_{pc} is 70-90 cm⁻¹ through control over the texturing rolling. Combined with the design of the oil coating amount, the surface friction coefficient of the alloy material in the direction of 0° and 90° under the condition of 4,500 N is 0.07-0.11. The alloy sheet is suitable for use in a factory under stamping conditions, which better balances the contradiction between stamping cracking and wrinkling.

In a preferred embodiment, in step S2, the homogenization-cooling and heat preservation integrated treatment includes homogenizing heat treatment and cooling and heat preservation treatment that are sequentially carried out, wherein a temperature of the homogenizing heat treatment is 540-570°C, a time is 4-25 h, and a heating rate is 20-80°C/h; and/or a temperature of the cooling and heat preservation treatment is 500-530°C, and a time is 1.5-18 h. Under the above conditions, precipitation of Mg₂Si in a cooling process of the homogenizing heat treatment can be better avoided, the structural uniformity is improved, the stamping formability, stability at room temperature and baking yield strength of the alloy sheet are further improved, meanwhile, the production efficiency is further improved, and the production cost is reduced.

In order to promote re-dissolution of soluble phases such as an Mg₂Si phase and a AlCuMgSi phase in the alloy and further increase the discontinuity degree of insoluble phases such as an AlFeMnSi phase to achieve the purpose of further improving the forming properties and mechanical properties of the alloy sheet, in a preferred embodiment, in step S3, an initial rolling temperature of the hot rolling is 490-530°C, and a finish rolling temperature is 240-360°C; and/or a thickness of the hot-rolled material is 4-8 mm.

In the preparation method of the present disclosure, detailed process parameters are further formulated for the hot rolling process. The initial rolling temperature is mainly considered to be higher than a solid solution/precipitation transition temperature of Mg₂Si in the alloy while controlling the finish rolling temperature and surface mass of the hot rolling. The finish rolling temperature is mainly lower than a precipitation temperature range of Mg₂Si while considering cooling and rolling capacities of equipment.

In a preferred embodiment, in step S4, a temperature of the intermediate annealing is 470-500°C, and a time is 15-60 s; and/or a reduction rate of the primary cold rolling is 15-60%, and a reduction rate of the secondary cold rolling is 62-82%; and/or a thickness of the cold-rolled material is 0.8-2.5 mm. The above conditions are more conducive to recrystallization of the structure of the alloy sheet and promote re-dissolution of Mg₂Si, thereby further improving properties of the finished sheet.

When the secondary cold rolling rate is larger, the grain structure of the alloy sheet is smaller, but the anisotropy Δr is larger. When the secondary cold rolling rate is smaller, the grain structure of the alloy sheet is larger, but the anisotropy Δr is smaller. In order to balance the grain structure and anisotropy Δr of the alloy material, the secondary cold rolling rate of the present disclosure is determined.

In order to further increase the recrystallization degree and the re-dissolution degree of Mg₂Si of the cold-rolled sheet, and further increase the precipitation of a stable cluster, in a preferred embodiment, in step S5, a temperature of the solid solution treatment is 510-560°C, and a time is 10-150 s; and/or a straightening amount of the straightening treatment is 0.3-1.0%; and/or a temperature of the pre-aging treatment is 60-100°C, and a time is 2-10 h. The stamping formability, stability at room temperature and baking yield strength of the alloy sheet can be further improved.

In a preferred embodiment, in step S3, a single-pass reduction of the hot rolling is 45-75 mm.

The single-pass reduction is increased mainly to break the grains and the second phase (intermetallic compound), which is determined by combining with a biting capability of equipment.

For the foregoing reasons, in a preferred embodiment, in step S4, a reduction rate of the primary cold rolling is 15-60%, and a reduction rate of the secondary cold rolling is 45-75%; and/or a reduction of the texturing rolling is 0.01-0.03 mm, and a rolling rate is 1.0-2.0 m/s.

The three, including the surface roughness Rₐ determined by the reduction of the texturing rolling and the surface roughness R_{pc} determined by the rolling rate in combination with the oil coating amount, determine a surface state of the alloy material, that is, a friction coefficient. When the friction coefficient is larger, material flow is not facilitated, and the problem of cracking is likely to be caused during the stamping. When the friction coefficient is smaller, material flow is facilitated, and the problem of wrinkling is likely to be caused during the stamping. Thus, the friction coefficient needs to be controlled within an appropriate range, and process parameters of the texturing rolling are determined by combining with a pressure of a stamping press of a main engine plant at about 4,500 N. The above conditions are more conducive to recrystallization of the structure of the alloy sheet and promote re-dissolution of Mg₂Si to control the surface roughness so as to control the friction coefficient, thereby further improving properties of the finished sheet.

In a preferred embodiment, in step S5, the temperature of the solid solution treatment is 540-560°C, and the time is 2-150 s; and/or the pre-aging treatment includes isothermal pre-aging treatment and cooling pre-aging treatment that are sequentially carried out, a temperature of the isothermal pre-aging treatment is 70-100°C, and a time is 2-10 h; and a winding temperature of the cooling pre-aging treatment is 75-95°C, and a cooling rate is ≤3°C/h.

The pre-aging may adopt the isothermal pre-aging treatment and the cooling pre-aging treatment that are sequentially carried out. The cooling pre-aging treatment specifically includes controlling the winding temperature and the cooling rate to achieve precipitation of a Type-II atomic cluster by means of waste heat of a coiled material. The atomic cluster can be effectively converted into a β" strengthening phase in a subsequent paint baking process, which can improve properties of the alloy. When the winding temperature is low, a Type-I atomic cluster is generated. The atomic cluster cannot be converted into a β" strengthening phase in a subsequent paint baking process, which is unfavorable to properties of the alloy. When the winding temperature is high, the initial yield strength of the alloy is high, which is unfavorable to stamping forming. When the cooling rate is high and the temperature is decreased quickly, a Type-I atomic cluster is generated below 70°C. The atomic cluster cannot be converted into a β" strengthening phase in a subsequent paint baking process, which is unfavorable to properties of the alloy. By controlling the winding temperature and the cooling rate, a pre-aging effect is achieved by means of waste heat of a coiled material without the need for a separate heat preservation furnace for heating, such that the production efficiency can be greatly improved, and the production cost is reduced.

In another typical embodiment of the present disclosure, a 6XXX series aluminum alloy sheet for a door inner panel is further provided, which is obtained by the preparation method of the present disclosure.

By designing a homogenization-cooling and heat preservation integrated treatment process, precipitation of Mg₂Si in the cooling process of homogenizing heat treatment can be avoided. Meanwhile, by increasing an intermediate annealing process between the primary cold rolling and the secondary cold rolling, the sheet structure undergoes recrystallization during the intermediate annealing, grains with a fibrous structure generated by the primary cold rolling are transitioned into elongated recrystallized grains, and rolling texturing is transitioned into recrystallization texturing, such that improvement of properties of the finished sheet is facilitated by regulating the microstructure and texture.

The sheet has good forming properties, such as high work hardening index, small anisotropy, high plane strain limit and moderate surface friction coefficient, has good mechanical properties, such as good stability at room temperature and high baking yield strength, and is suitable for being applied to stamping forming of door inner panels of automobiles, which is conducive to achieving the consistency and circular recycling of the alloy series of door inner panels and door outer panels, and can greatly decrease energy consumption, reduce environmental pollution and promote high-quality development of the automobile industry.

Due to the specificity of the alloy field, the present disclosure cannot describe all the microstructures of the aluminum alloy one by one. However, it can be seen from the above that the preparation method has a significant impact on the microscopic structure of the aluminium alloy, yet it is difficult to completely characterize same. Therefore, the preparation method for the aluminium alloy in the present disclosure defines the aluminium alloy product.

In another typical embodiment of the present disclosure, an application of the 6XXX series aluminum alloy sheet for a door inner panel of the present disclosure in the field of door inner panels of automobiles is further provided, including four-door two-cover inner panels or five-door one-cover inner panels of passenger vehicles and commercial vehicles, etc. An application diagram of the 6XXX series aluminum alloy sheet for a door inner panel in a typical embodiment of the present disclosure in the field of door inner panels of automobiles is shown in Fig. 1.

Typically but non-restrictively, the components of the 6XXX series aluminum alloy sheet for a door inner panel include, by weight percentage: 0.9%, 1.0%, 1.1%, 1.2%, 1.3%, 1.4%, 1.5%, 1.55%, 1.58%, 1.60%, 1.62%, 1.65%, 1.68%, 1.70%, 1.72%, 1.75%, 1.78%, 1.80%, 1.82%, 1.85%, or a range value composed of any two of the foregoing numerical values of Si, 0.15%, 0.17%, 0.18%, 0.20%, 0.22%, 0.25%, 0.28%, 0.3%, 0.35%, 0.4%, or a range value composed of any two of the foregoing numerical values of Fe, 0.05%, 0.08%, 0.10%, 0.15%, 0.20%, 0.22%, 0.25%, 0.3%, or a range value composed of any two of the foregoing numerical values of Cu, 0.05%, 0.08%, 0.10%, 0.12%, 0.15%, or a range value composed of any two of the foregoing numerical values of Mn, 0.2%, 0.3%, 0.39%, 0.5%, 0.6%, 0.66%, 0.7%, 0.8%, 0.9%, or a range value composed of any two of the foregoing numerical values of Mg, 0.01%, 0.015%, 0.02%, 0.025%, 0.03%, or a range value composed of any two of the foregoing numerical values of Ti, 0.1%, 0.12%, 0.14%, 0.16%, 0.18%, 0.2%, or a range value composed of any two of the foregoing numerical values of Cr, and equal to or less than 0.15% of inevitable impurities, wherein the content of each inevitable impurity is ≤0.05%, and the balance is Al.

Typically but non-restrictively, the atomic ratio of Si to Mg in the 6XXX aluminum alloy sheet for a door inner panel is 0.9:1, 1.0:1, 1.2:1, 1.4:1, 1.5:1, 1.7:1, 2.1:1, 2.5:1, 3.0:1, 3.4:1, 3.5:1, 4.0:1, 4.5:1, 5.0:1, 5.5:1, 6.0:1, 6.5:1, 7.0:1, 7.5:1, 7.9:1, or a range value composed of any two of the foregoing numerical values.

Typically but non-restrictively, in step S2, the temperature of the homogenizing heat treatment is 540°C, 545°C, 550°C, 555°C, 560°C, 565°C, 570°C, or a range value composed of any two of the foregoing numerical values, the time is 4 h, 6 h, 10 h, 15 h, 20 h, 25 h, or a range value composed of any two of the foregoing numerical values, and the heating rate is 20°C/h, 30°C/h, 40°C/h, 50°C/h, 60°C/h, 70°C/h, 80°C/h, or a range value composed of any two of the foregoing numerical values.

Typically but non-restrictively, in step S2, the temperature of the cooling and heat preservation treatment is 500°C, 505°C, 510°C, 515°C, 520°C, 525°C, 530°C, or a range value composed of any two of the foregoing numerical values, and the time is 1.5 h, 3 h, 5 h, 7 h, 10 h, 12 h, 15 h, 18 h, or a range value composed of any two of the foregoing numerical values.

Typically but non-restrictively, in step S3, the initial rolling temperature of the hot rolling is 490°C, 495°C, 500°C, 505°C, 510°C, 515°C, 520°C, 525°C, 530°C, or a range value composed of any two of the foregoing numerical values, and the finish rolling temperature is 240°C, 250°C, 260°C, 270°C, 280°C, 290°C, 300°C, 310°C, 320°C, 330°C, 340°C, 350°C, 360°C, or a range value composed of any two of the foregoing numerical values.

Typically but non-restrictively, in step S4, the temperature of the intermediate annealing is 470°C, 475°C, 480°C, 485°C, 490°C, 495°C, 500°C, or a range value composed of any two of the foregoing numerical values, and the time is 15 s, 20 s, 30 s, 40 s, 50 s, 60 s, or a range value composed of any two of the foregoing numerical values.

Typically but non-restrictively, in step S4, the reduction rate of the primary cold rolling is 15%, 20%, 30%, 40%, 50%, 60%, or a range value composed of any two of the foregoing numerical values, and the reduction rate of the secondary cold rolling is 45%, 50%, 55%, 62%, 65%, 70%, 75%, 80%, 82%, or a range value composed of any two of the foregoing numerical values.

Typically but non-restrictively, in step S4, the reduction of the texturing rolling is 0.01 mm, 0.015 mm, 0.02 mm, 0.025 mm, 0.03 mm, or a range value composed of any two of the foregoing numerical values, and the rolling rate is 1.0 m/s, 1.2 m/s, 1.5 m/s, 1.8 m/s, 2.0 m/s, or a range value composed of any two of the foregoing numerical values.

Typically but non-restrictively, in step S5, the temperature of the solid solution treatment is 510°C, 520°C, 530°C, 540°C, 550°C, 560°C, or a range value composed of any two of the foregoing numerical values, and the time is 10 s, 30 s, 50 s, 80 s, 100 s, 120 s, 150 s, or a range value composed of any two of the foregoing numerical values.

Typically but non-restrictively, in step S5, the straightening amount of the straightening treatment is 0.3%, 0.5%, 0.6%, 0.8%, 1.0%, or a range value composed of any two of the foregoing numerical values.

Typically but non-restrictively, in step S5, the temperature of the pre-aging treatment is 60°C, 65°C, 70°C, 75°C, 80°C, 85°C, 90°C, 95°C, 100°C, or a range value composed of any two of the foregoing numerical values, and the time is 2 h, 3 h, 4 h, 5 h, 6 h, 7 h, 8 h, 9 h, 10 h, or a range value composed of any two of the foregoing numerical values.

Typically but non-restrictively, in step S5, the winding temperature of the pre-aging treatment is 75°C, 80°C, 85°C, 90°C, 95°C, or a range value composed of any two of the foregoing numerical values, and the cooling rate is 0.5°C/h, 1°C/h, 1.5°C/h, 2°C/h, 2.5°C/h, 3°C/h, or a range value composed of any two of the foregoing numerical values.

The present disclosure is further described in detail below in conjunction with specific embodiments, and these embodiments shall not be construed as limiting the scope of protection as claimed by the present disclosure.

### Example 1

Components of a 6XXX series aluminum alloy sheet are shown in Table 1, and parameters of a preparation process are shown in Table 2.

In step S1, raw materials of the 6XXX series aluminum alloy sheet were mixed according to component proportions, and subjected to smelting and casting to obtain an aluminum alloy ingot.

In step S2, the aluminum alloy ingot was sequentially subjected to homogenizing heat treatment (30°C/h, 560°C×8 h) and cooling and heat preservation treatment (520°C×2 h) to obtain an integrated ingot.

In step S3, the integrated ingot was removed from a furnace and subjected to hot rolling directly at an initial rolling temperature of 510°C and a finish rolling temperature of 270°C to obtain a hot-rolled material with a thickness of 6 mm.

In step S4, the hot-rolled material was sequentially subjected to primary cold rolling (at a reduction rate of 45%), intermediate annealing (490°C×30 s) and secondary cold rolling (at a reduction rate of 70%) to obtain a cold-rolled material with a thickness of 1.0 mm.

In step S5, the cold-rolled material was sequentially subjected to solid solution treatment (555°C×30 s), straightening treatment (at a straightening amount of 0.5%) and pre-aging treatment (90°C×8 h) to obtain the 6XXX series aluminum alloy sheet.

Properties of the 6XXX series aluminum alloy sheet that was parked at room temperature for 7 days were evaluated. Evaluation results are shown in Table 3.

### Examples 2 to 7

Different from Example 1, components of 6XXX series aluminum alloy sheets are different, see Table 1 for detail.

### Examples 8 to 14

Different from Example 1, parameters of preparation processes of 6XXX series aluminum alloy sheets are different, see Table 2 for detail.

### Examples 15 to 16

Different from Example 1, components of 6XXX series aluminum alloy sheets are different, see Table 1 for detail.

### Examples 17 to 20

Different from Example 1, parameters of preparation processes of 6XXX series aluminum alloy sheets are different, see Table 2 for detail.

### Comparative Examples 1 to 5

Different from Example 1, components of 6XXX series aluminum alloy sheets are different, see Table 1 for detail.

### Comparative Examples 6 to 11

Different from Example 1, parameters of preparation processes of 6XXX series aluminum alloy sheets are different, see Table 2 for detail.

### Comparative Examples 12 to 13

Different from Example 1, components of 6XXX series aluminum alloy sheets are different, see Table 1 for detail.

### Comparative Examples 14 to 18

Different from Example 1, parameters of preparation processes of 6XXX series aluminum alloy sheets are different, see Table 2 for detail.

### Test methods:

Work hardening Index n₍₁₀₋₂₀₎: It refers to GB/T 5028-2008 Metallic materials-Sheet and strip-Determination of tensile strain hardening exponent (n value), or ISO 10275: 2007 Metallic materials-Sheet and strip-Determination of tensile strain hardening exponent (n value).

Anisotropy Δr₁₀: It refers to GB/T 5027-2016 Metallic materials-Sheet and strip-Determination of plastic strain ratio (r value), or ISO 10113: 2006 Metallic materials-Sheet and strip-Determination of plastic strain ratio (r value).

Plane strain limit FLCₘᵢₙ: It refers to GB/T 15825.8-2008 Sheet metal formability and test methods. Part 8: Guidelines for the determination of forming-limit diagrams (FLD).

180-day stability at room temperature: It indicates changes in differences of the yield strength with the room temperature parking time after parking at room temperature for 7 days to 180 days, and a yield strength test refers to GB/T 228-2010 Metallic Materials-Tensile Testing: Method of Test at Room Temperature, or ISO 6892: 1998 Metallic Materials-Tensile Testing: Method of Test at Room Temperature.

Baking yield strength R_{p0.2}(BH): It indicates the yield strength of an alloy sheet measured after pre-stretching by 2% and baking at 185°C for 20 min, and a yield strength test refers to GB/T 228-2010 Metallic Materials-Tensile Testing: Method of Test at Room Temperature, or ISO 6892: 1998 Metallic Materials-Tensile Testing: Method of Test at Room Temperature.

Elongation A₅₀: It refers to ISO 6892: 1998 Metallic Materials-Tensile Testing: Method of Test at Room Temperature.

Surface roughness Rₐ: ISO 4287-2010 Geometrical Product Specifications (GPS) - Surface texture: Profile method - Terms, definitions and surface texture parameters.

Surface roughness R_{pc}: ISO 4287-2010 Geometrical Product Specifications (GPS) - Surface texture: Profile method - Terms, definitions and surface texture parameters.

Surface friction coefficient of the 6XXX series aluminum alloy sheet for a door inner panel in the direction of 0° and 90° under the condition of 4,500 N: YB/T 4286-2012 Metallie material-Sheet and strip-Testing method for coefficient of friction.

**Table 1**

| Weight percentage (wt.%) | Si | Fe | Cu | Mn | Mg | Ti | Cr | Al and inevitable impurities | Atomic ratio of Si to Mg |
|---|---|---|---|---|---|---|---|---|---|
| Example 1 | 1.62 | 0.18 | 0.06 | 0.12 | 0.40 | 0.03 | 0 | Balance | 3.5 |
| Example 2 | 1.62 | 0.18 | 0.22 | 0.1 | 0.39 | 0.02 | 0 | Balance | 3.6 |
| Example 3 | 1.79 | 0.17 | 0.06 | 0.11 | 0.41 | 0.02 | 0 | Balance | 3.7 |
| Example 4 | 1.62 | 0.18 | 0.05 | 0.12 | 0.66 | 0.03 | 0 | Balance | 2.1 |
| Example 5 | 1.79 | 0.18 | 0.06 | 0.11 | 0.64 | 0.02 | 0 | Balance | 2.4 |
| Example 6 | 1.55 | 0.3 | 0.05 | 0.15 | 0.2 | 0.01 | 0 | Balance | 6.6 |
| Example 7 | 1.85 | 0.18 | 0.3 | 0.05 | 0.9 | 0.03 | 0 | Balance | 1.8 |
| Example 15 | 0.9 | 0.4 | 0.06 | 0.12 | 0.9 | 0.03 | 0.1 | Balance | 1 |
| Example 16 | 1.3 | 0.18 | 0.06 | 0.12 | 0.2 | 0.03 | 0.2 | Balance | 6.5 |
| Comparative Example 1 | **1.50** | 0.17 | 0.05 | 0.12 | **1.26** | 0.02 | 0 | Balance | **1.0** |
| Comparative Example 2 | **1.50** | 0.17 | 0.06 | 0.12 | 0.41 | 0.03 | 0 | Balance | 3.1 |
| Comparative Example 3 | 1.62 | 0.17 | 0.05 | 0.12 | **1.26** | 0.02 | 0 | Balance | **1.1** |
| Comparative Example 4 | **1.04** | 0.15 | **0.35** | 0.09 | 0.64 | 0.02 | 0 | Balance | **1.4** |
| Comparative Example 5 | **1.90** | 0.16 | 0.05 | 0.1 | 0.39 | 0.02 | 0 | Balance | 4.2 |
| Comparative Example 12 | **0.85** | 0.17 | 0.05 | 0.12 | **1.26** | 0.02 | 0 | Balance | 0.67 |
| Comparative Example 13 | **0.85** | 0.17 | 0.05 | 0.12 | **1.26** | 0.02 | 0 | Balance | 0.67 |

**Table 2**

| / | Homogenizing heat treatment-cool ing and heat preservation integrated process | Hot rolling | | | Cold rolling | | | | | | Post-treatment | | |
|---|---|---|---|---|---|---|---|---|---|---|---|---|---|
| | | Initi al rolli ng tem pera ture | Fini sh rolli ng tem pera ture | Thic kne ss of a hot-r olle d mat erial | Red ucti on rate of prim ary cold rolli ng | Interm ediate annea ling | Red ucti on rate of see and ary cold rolli ng | Reduc tion of texturi ng rolling | Text urin g rolli ng rate | Thic knes s of a cold-rolle d mat erial | Solid solutio n | Strai ghte ning amo unt | Pre-a ging |
| | / | °C | °C | mm | % | / | % | mm | m/s | mm | / | % | / |
| Example 1 | (30°C/h) 560°C×8 h+520°C×2 h | 510 | 270 | 6 | 45 | 490°C ×30 s | 70 | / | / | 1 | 555°C ×30 s | 0.5 | 90°C ×8 h |
| Example 8 | (30°C/h) 540°C×20 h+510°C×12 h | 500 | / | / | 30 | / | / | / | / | 1.3 | / | / | / |
| Example 9 | / | 510 | 315 | 5.5 | 40 | / | / | / | / | / | / | / | / |
| Example 10 | / | / | / | / | 42 | 485°C ×60 s | 76 | / | / | 0.85 | / | / | / |
| Example 11 | / | / | / | 7 | / | / | / | / | / | 1.15 | 520°C ×60 s | / | / |
| Example 12 | / | / | / | 7.3 | / | / | / | / | / | 12 | / | / | 75°C ×4 h |
| Example 13 | (20°C/h) 540°C×25 h+500°C×18 h | 490 | 240 | 8 | 45 | 470°C ×60 s | 82 | / | / | 0.8 | 510°C ×150 s | 0.3 | 60°C ×10 h |
| Example 14 | (80°C/h) 570°C×4 h+530°C×1.5 h | 530 | 360 | 4 | 15 | 500°C ×15 s | 62 | / | / | 1.3 | 560°C ×10 s | 1 | 100° C×2 h |
| Example 17 | / | / | / | / | / | / | / | 0.02 | 1.5 | / | / | / | / |
| Example 18 | / | / | / | / | 43 | 485°C ×60 s | 75 | / | / | 0.85 | / | / | / |
| Example 19 | / | / | / | 7 | / | / | / | / | / | 1.15 | 540°C ×60 s | / | / |
| Example 20 | (20°C/h) 540°C×25 h+500°C×18 h | 490 | 240 | 8 | 60 | 470°C ×60 s | 75 | / | / | 0.8 | 540°C ×150 s | 0.3 | 70°C ×10 h |
| Comparative Example 6 | (30°C/h) **520°C**×8 h+**480°C**×2 h | 470 | / | / | / | / | / | / | / | / | / | / | / |
| Comparative Example 7 | Homogenizati on (30°C/h) 560°C×8 h, air cooling to room temperature; secondary heating 520°C×2 h | / | / | / | / | / | / | / | / | / | / | / | / |
| Comparative Example 8 | / | 510 | 370 | 8 | / | / | / | / | / | 1.3 | / | / | / |
| Comparative Example 9 | / | / | / | / | / | 430°C ×30 s | / | / | / | / | / | / | / |
| Comparative Example 10 | / | / | / | / | / | / | / | / | / | / | 500°C ×30 s | / | / |
| Comparative Example 11 | / | / | / | / | / | / | / | / | / | / | / | / | 55°C ×8 h |
| Comparative Example 14 | / | / | / | / | / | / | / | **0.04** | 1.5 | / | / | / | / |
| Comparative Example 15 | / | / | / | / | / | / | / | 0.02 | **0.5** | / | / | / | / |
| Comparative Example 16 | / | / | / | / | / | / | / | **0.005** | 1.5 | / | / | / | / |
| Comparative Example 17 | / | / | / | / | / | / | / | 0.02 | **3.0** | / | / | / | / |
| Comparative Example 18 | / | / | / | / | / | / | **40** | / | / | / | / | / | / |

| | | | | | | | | | | | | | |
|---|---|---|---|---|---|---|---|---|---|---|---|---|---|
| Note: "/" in Table 2 indicates the same as Example 1. | | | | | | | | | | | | | |

**Table 3**

| / | Work harde ning index n(10-20) | Ani sotr opy Δr₁₀ | Plan e strai n limit FLC min | Stability at room temperat ure (180 d-7 d) | Baking yield strengt h R_{p0.2}(B H) | Elong ation A₅₀ | Friction coefficie nt (0°) | Friction coefficie nt (90°) | Grain size |
|---|---|---|---|---|---|---|---|---|---|
| | / | / | / | MPa | MPa | % | / | / | µm |
| Example 1 | 0.30 | 0.1 0 | 0.21 | 12 | 252 | 30 | 0.10 | 0.09 | 32 |
| Example 2 | 0.29 | 0.0 8 | 0.21 | 10 | 260 | 29 | 0.10 | 0.09 | 34 |
| Example 3 | 0.29 | 0.1 3 | 0.20 | 13 | 256 | 29 | 0.10 | 0.09 | 33 |
| Example 4 | 0.28 | 0.0 9 | 0.21 | 15 | 270 | 28 | 0.10 | 0.09 | 35 |
| Example 5 | 0.29 | 0.1 2 | 0.21 | 12 | 276 | 29 | 0.10 | 0.09 | 32 |
| Example 6 | 0.30 | 0.11 | 0.21 | 12 | 250 | 30 | 0.10 | 0.09 | 32 |
| Example 7 | 0.29 | 0.1 2 | 0.21 | 13 | 258 | 29 | 0.10 | 0.09 | 33 |
| Example 8 | 0.30 | 0.0 9 | 0.22 | 12 | 252 | 30 | 0.10 | 0.09 | 35 |
| Example 9 | 0.29 | 0.1 2 | 0.20 | 14 | 250 | 29 | 0.10 | 0.09 | 34 |
| Example 10 | 0.30 | 0.1 0 | 0.21 | 12 | 251 | 30 | 0.10 | 0.09 | 33 |
| Example 11 | 0.30 | 0.1 0 | 0.21 | 14 | 250 | 30 | 0.10 | 0.09 | 33 |
| Example 12 | 0.29 | 0.1 0 | 0.21 | 13 | 250 | 29 | 0.10 | 0.09 | 32 |
| Example 13 | 0.29 | 0.1 3 | 0.20 | 14 | 251 | 29 | 0.10 | 0.09 | 33 |
| Example 14 | 0.28 | 0.1 2 | 0.20 | 13 | 252 | 28 | 0.10 | 0.09 | 33 |
| Example 15 | 0.29 | 0.1 0 | 0.21 | 12 | 254 | 31 | 0.10 | 0.09 | 30 |
| Example 16 | 0.29 | 0.11 | 0.21 | 11 | 255 | 30 | 0.10 | 0.09 | 32 |
| Example 17 | 0.30 | 0.1 0 | 0.21 | 12 | 252 | 30 | 0.10 | 0.09 | 32 |
| Example 18 | 0.30 | 0.1 0 | 0.21 | 12 | 251 | 30 | 0.10 | 0.09 | 33 |
| Example 19 | 0.30 | 0.1 0 | 0.21 | 14 | 250 | 30 | 0.10 | 0.09 | 33 |
| Example 20 | 0.29 | 0.1 3 | 0.20 | 14 | 251 | 29 | 0.10 | 0.09 | 33 |
| Comparative Example 1 | **0.27** | 0.1 0 | **0.16** | **29** | 257 | **27** | 0.10 | 0.09 | 35 |
| Comparative Example 2 | **0.27** | 0.11 | **0.17** | 14 | **238** | 27 | 0.10 | 0.09 | 34 |
| Comparative Example 3 | **0.26** | 0.1 0 | **0.16** | **31** | 282 | **26** | 0.10 | 0.09 | 35 |
| Comparative Example 4 | **0.27** | 0.0 7 | 0.21 | 9 | 270 | 27 | 0.10 | 0.09 | 35 |
| Comparative Example 5 | **0.26** | **0.1 6** | **0.16** | **16** | **230** | **26** | 0.10 | 0.09 | 33 |
| Comparative Example 6 | **0.27** | 0.1 5 | **0.16** | **16** | **237** | **27** | 0.10 | 0.09 | 32 |
| Comparative Example 7 | **0.27** | 0.1 4 | **0.16** | **17** | **238** | **27** | 0.10 | 0.09 | 34 |
| Comparative Example 8 | **0.27** | 0.1 4 | **0.18** | **16** | **240** | **27** | 0.10 | 0.09 | 32 |
| Comparative Example 9 | **0.27** | **0.1 6** | **0.17** | **17** | **238** | **27** | 0.10 | 0.09 | 33 |
| Comparative Example 10 | **0.27** | 0.1 5 | **0.19** | **16** | **242** | **27** | 0.10 | 0.09 | 31 |
| Comparative Example 11 | 0.29 | 0.11 | 0.21 | **20** | **234** | **29** | 0.10 | 0.09 | 32 |
| Comparative Example 12 | **0.27** | 0.11 | **0.16** | **27** | 257 | **27** | 0.10 | 0.09 | **35** |
| Comparative Example 13 | **0.27** | 0.1 0 | **0.17** | **27** | **238** | **27** | 0.10 | 0.09 | **34** |
| Comparative Example 14 | 0.30 | 0.1 0 | 0.21 | 12 | 252 | 30 | **0.13** | **0.12** | 33 |
| Comparative Example 15 | 0.30 | 0.1 0 | 0.21 | 12 | 252 | 30 | **0.12** | 0.11 | 33 |
| Comparative Example 16 | 0.30 | 0.1 0 | 0.21 | 12 | 252 | 30 | **0.06** | **0.05** | 33 |
| Comparative Example 17 | 0.30 | 0.1 0 | 0.21 | 12 | 252 | 30 | 0.07 | **0.06** | 33 |
| Comparative Example 18 | 0.27 | 0.1 0 | 0.18 | 12 | 246 | 27 | 0.10 | 0.09 | **40** |

In Comparative Example 1, the atomic ratio of element Si to element Mg is close to 1:1, and the density of a dispersed phase is relatively low, such that the stamping formability of the alloy sheet is relatively poor. Meanwhile, the stability at room temperature of the alloy sheet is also relatively poor.

In Comparative Example 2, the content of element Si is decreased, and the density of a dispersed phase is relatively low, such that deformation is non-uniform, the work hardening index and plane strain limit of the alloy sheet are relatively low, and the stamping formability of the alloy sheet is relatively poor.

In Comparative Example 3, the atomic ratio of element Si to element Mg is close to 1:1, and the contents of elements Si and Mg are further increased compared with that in Comparative Example 1, such that the stamping formability of the alloy sheet is further decreased, and the stability at room temperature is also further reduced. Moreover, the content of element Mg in Comparative Example 3 is relatively high, and the density of a dispersed phase is relatively low, such that the stamping formability of the alloy sheet is relatively poor, and the stability at room temperature is also further reduced.

In Comparative Example 4, the content of element Cu is relatively high, such that the initial yield strength of the alloy sheet is increased, the stability at room temperature is improved, the baking yield strength is increased, but the work hardening index is slightly decreased, and the stamping formability of the alloy sheet is slightly decreased.

In Comparative Example 5, the content of element Si is relatively high and exceeds the maximum solid solubility limit of element Si in the aluminum alloy, and massive elemental Si appearing in an ingot is unable to be completely redissolved in the homogenization process, resulting in adverse impacts on subsequent processing and heat treatment processes. During the solid solution, element Si is unable to be redissolved and still exists as elemental Si, such that the stamping formability of the alloy sheet is decreased, the stability at room temperature is reduced, and the baking yield strength is decreased.

In Comparative Example 6, the homogenization temperature is relatively low, the initial rolling temperature of the hot rolling is relatively low, the uniformity of an as-cast structure is not high, soluble phases such as an Mg₂Si phase and a AlCuMgSi phase are not completely redissolved, and the discontinuity degree of insoluble phases such as an AlFeMnSi phase is not high, such that the stamping formability of the alloy sheet is decreased, the stability at room temperature is reduced, and the baking yield strength is decreased.

In Comparative Example 7, the homogenization-cooling and heat preservation integrated process is not adopted, air cooling is carried out to room temperature after homogenizing heat treatment, then hot rolling is carried out after secondary heating, and a large amount of Mg₂Si precipitated in a cooling process of the homogenizing heat treatment results in adverse impacts on subsequent processing and heat treatment processes, such that the stamping formability of the alloy sheet is decreased, the stability at room temperature is reduced, and the baking yield strength is decreased.

In Comparative Example 8, since the finish rolling temperature of the hot rolling is relatively high, a large amount of Mg₂Si is precipitated and results in adverse impacts on subsequent processing and heat treatment processes, such that the stamping formability of the alloy sheet is decreased, the stability at room temperature is reduced, and the baking yield strength is decreased.

In Comparative Example 9, the temperature of the intermediate annealing is relatively low, the degree of recrystallization occurring in the intermediate annealing process is relatively low, and the number of Mg₂Si redissolved is relatively small and results in adverse impacts on subsequent processing and heat treatment processes, such that the stamping formability of the alloy sheet is decreased, the stability at room temperature is reduced, and the baking yield strength is decreased.

In Comparative Example 10, the temperature of the solid solution is relatively low, the recrystallization degree of a cold-rolled sheet is relatively low, and the re-dissolution degree of Mg₂Si is relatively poor, such that the stamping formability of the alloy sheet is decreased, the stability at room temperature is reduced, and the baking yield strength is decreased.

In Comparative Example 11, the temperature of the pre-aging is relatively low, and fewer stable clusters are precipitated, such that the stability at room temperature of the alloy sheet is reduced, and the baking yield strength is decreased.

In Comparative Example 12, the content of element Mg is relatively high, the content of element Si is relatively low, and the density of a diffused phase is relatively low, such that the stamping formability of the alloy sheet is relatively poor. Meanwhile, the stability at room temperature of the alloy components is also relatively poor.

In Comparative Example 13, the content of element Si is decreased, and the density of a dispersed phase is relatively low, such that deformation is non-uniform, the work hardening index and plane strain limit of the alloy sheet are relatively low, and the stamping formability of the alloy sheet is relatively poor.

In Comparative Example 14, the reduction of the texturing rolling is 0.04 mm, which is relatively large, results in relatively high surface roughness Rₐ and increased friction coefficient and is not conducive to material flow in a stamping process, such that the stamping formability of the alloy sheet is decreased.

In Comparative Example 15, the rolling rate of the texturing rolling is 0.5 m/s, which is relatively low, results in relatively high surface roughness R_{pc} and increased friction coefficient and is not conducive to material flow in a stamping process, such that the stamping formability of the alloy sheet is decreased.

In Comparative Example 16, the reduction of the texturing rolling is 0.005 mm, which is relatively small and results in relatively low surface roughness Rₐ, decreased friction coefficient and too fast material flow in a stamping process, leading to the problem of wrinkling during stamping of the alloy sheet.

In Comparative Example 17, the rolling rate of the texturing rolling is 3.0 m/s, which is relatively high and results in relatively low surface roughness R_{pc}, decreased friction coefficient and too fast material flow in a stamping process, leading to the problem of wrinkling during stamping of the alloy sheet.

In Comparative Example 18, the cold rolling rate is 40%, the energy storage in the cold rolling process is relatively low, and the grain size during recrystallization is relatively large, leading to decrease of the elongation and decrease of the stamping formability of the alloy sheet.

It can be seen from the above that, compared with comparative examples, by innovatively designing the alloy components and precisely controlling a processing technology in various examples of the present disclosure, using the excessive Si system and limiting the specific atomic ratio of Si to Mg, the density of a dispersed phase is increased, a slip system is changed, and deformation is more uniform, thereby improving the stamping formability of the alloy sheet and facilitating improvement of the stability at room temperature of the alloy sheet. The content of element Cu is appropriately controlled to reduce adverse impacts on the stamping formability. Meanwhile, since the homogenization-cooling and heat preservation integrated process is used in various examples of the present disclosure, by precisely controlling the initial rolling temperature of the hot rolling, the finish rolling temperature of the hot rolling, the thickness of a hot-rolled coiled material, the intermediate annealing process, the thickness of a secondary cold-rolled coiled material, the solid solution process, the straightening amount and the pre-aging process, novel 6XXX series aluminum alloy sheets with excellent stamping formability, excellent stability at room temperature and excellent baking yield strength are obtained, which can be promoted and applied in the field of door inner panels of automobiles.

## Claims

1. A preparation method for a 6XXX series aluminum alloy sheet for a door inner panel, **characterized in that** components of the 6XXX series aluminum alloy sheet for a door inner panel comprise, by weight percentage: 0.9-1.85% of Si, 0.15-0.4% of Fe, 0.05-0.3% of Cu, 0.05-0.15% of Mn, 0.2-0.9% of Mg, 0.01-0.03% of Ti, 0.1-0.2% of Cr, and equal to or less than 0.15% of inevitable impurities, wherein a content of each inevitable impurity is ≤0.05%, the balance is Al, and an atomic ratio of Si to Mg is (0.9-7.9):1;
the preparation method comprises the following steps:
step S1, mixing raw materials of the 6XXX series aluminum alloy sheet for a door inner panel according to component proportions, and carrying out smelting and casting to obtain an aluminum alloy ingot;
step S2, subjecting the aluminum alloy ingot to homogenization-cooling and heat preservation integrated treatment to obtain an integrated ingot;
step S3, removing the integrated ingot from a furnace, and carrying out hot rolling directly to obtain a hot-rolled material;
step S4, sequentially subjecting the hot-rolled material to primary cold rolling, intermediate annealing, secondary cold rolling and optional texturing rolling to obtain a cold-rolled material;
step S5, sequentially subjecting the cold-rolled material to solid solution treatment, straightening treatment and pre-aging treatment to obtain a semi-finished sheet; and
step S6, subjecting the semi-finished sheet to optional surface treatment to obtain the 6XXX series aluminum alloy sheet for a door inner panel.

2. The preparation method according to claim 1, **characterized in that** the components of the 6XXX series aluminum alloy sheet for a door inner panel comprise, by weight percentage: 1.3-1.55% of Si, 0.17-0.18% of Fe, 0.05-0.22% of Cu, 0.1-0.12% of Mn, 0.39-0.66% of Mg, 0.02-0.03% of Ti, 0.1-0.2% of Cr, and equal to or less than 0.15% of inevitable impurities, wherein the content of each inevitable impurity is ≤0.05%, the balance is Al, and the atomic ratio of Si to Mg is (1.7-3.4):1.

3. The preparation method according to claim 1, **characterized in that** the components of the 6XXX series aluminum alloy sheet for a door inner panel comprise, by weight percentage: 1.55-1.85% of Si, equal to or less than 0.3% of Fe, 0.05-0.3% of Cu, 0.05-0.15% of Mn, 0.2-0.9% of Mg, 0.01-0.03% of Ti, and equal to or less than 0.15% of inevitable impurities, wherein the content of each inevitable impurity is ≤0.05%, the balance is Al, and the atomic ratio of Si to Mg is (1.5-7.9):1;
the preparation method comprises the following steps:
step S1, mixing the raw materials of the 6XXX series aluminum alloy sheet for a door inner panel according to the component proportions, and carrying out the smelting and the casting to obtain the aluminum alloy ingot;
step S2, subjecting the aluminum alloy ingot to the homogenization-cooling and heat preservation integrated treatment to obtain the integrated ingot;
step S3, removing the integrated ingot from the furnace, and carrying out the hot rolling directly to obtain the hot-rolled material;
step S4, sequentially subjecting the hot-rolled material to the primary cold rolling, the intermediate annealing and the secondary cold rolling to obtain the cold-rolled material; and
step S5, sequentially subjecting the cold-rolled material to the solid solution treatment, the straightening treatment and the pre-aging treatment to obtain the 6XXX series aluminum alloy sheet for a door inner panel.

4. The preparation method according to claim 3, **characterized in that** the components of the 6XXX series aluminum alloy sheet for a door inner panel comprise, by weight percentage: 1.60-1.80% of Si, 0.17-0.18% of Fe, 0.05-0.22% of Cu, 0.1-0.12% of Mn, 0.39-0.66% of Mg, 0.02-0.03% of Ti, and equal to or less than 0.15% of inevitable impurities, wherein the content of each inevitable impurity is ≤0.05%, the balance is Al, and the atomic ratio of Si to Mg is (2.1-4.0):1.

5. The preparation method according to any one of claims 1 to 4, **characterized in that** a work hardening index n₍₁₀₋₂₀₎ of the 6XXX series aluminum alloy sheet for a door inner panel is ≥0.28, an anisotropy Δr₁₀ is ≤0.15, and a plane strain limit FLCₘᵢₙ is ≥0.2.

6. The preparation method according to any one of claims 1 to 5, **characterized in that** a 180-day stability at room temperature of the 6XXX series aluminum alloy sheet for a door inner panel is ≤15 MPa, and a baking yield strength R_{p0.2}(BH) is ≥250 MPa.

7. The preparation method according to any one of claims 1 to 6, **characterized in that** an average grain size of the 6XXX series aluminum alloy sheet for a door inner panel is ≤35 µm; and/or an elongation A₅₀ of the 6XXX series aluminum alloy sheet for a door inner panel is ≥28%.

8. The preparation method according to any one of claims 1 to 7, **characterized in that**
a surface roughness Rₐ of the 6XXX series aluminum alloy sheet for a door inner panel is 0.7-0.9 µm, and a surface roughness R_{pc} is 70-90 cm⁻¹; and/or
an oil coating amount of the 6XXX series aluminum alloy sheet for a door inner panel is 0.9-1.1 g/m²; and/or
a surface friction coefficient of the 6XXX series aluminum alloy sheet for a door inner panel in the direction of 0° and 90° under the condition of 4,500 N is 0.07-0.11.

9. The preparation method according to any one of claims 1 to 8, **characterized in that** in step S2,
the homogenization-cooling and heat preservation integrated treatment comprises homogenizing heat treatment and cooling and heat preservation treatment that are sequentially carried out, wherein
a temperature of the homogenizing heat treatment is 540-570°C, a time is 4-25 h, and a heating rate is 20-80°C/h; and/or
a temperature of the cooling and heat preservation treatment is 500-530°C, and a time is 1.5-18 h.

10. The preparation method according to any one of claims 1 to 9, **characterized in that** in step S3,
an initial rolling temperature of the hot rolling is 490-530°C, and a finish rolling temperature is 240-360°C; and/or
a thickness of the hot-rolled material is 4-8 mm.

11. The preparation method according to any one of claims 1 to 10, **characterized in that** in step S4,
a temperature of the intermediate annealing is 470-500°C, and a time is 15-60 s; and/or
a reduction rate of the primary cold rolling is 15-60%, and a reduction rate of the secondary cold rolling is 62-82%; and/or
a thickness of the cold-rolled material is 0.8-2.5 mm.

12. The preparation method according to any one of claims 1 to 11, **characterized in that** in step S5,
a temperature of the solid solution treatment is 510-560°C, and a time is 10-150 s; and/or
a straightening amount of the straightening treatment is 0.3-1.0%; and/or
a temperature of the pre-aging treatment is 60-100°C, and a time is 2-10 h.

13. The preparation method according to any one of claims 1 to 9, **characterized in that**
in step S3, a single-pass reduction of the hot rolling is 45-75 mm;
and/or
in step S4,
a reduction rate of the primary cold rolling is 15-60%, and a reduction rate of the secondary cold rolling is 45-75%; and/or
a reduction of the texturing rolling is 0.01-0.03 mm, and a rolling rate is 1.0-2.0 m/s; and/or
in step S5,
the temperature of the solid solution treatment is 540-560°C, and the time is 2-150 s; and/or
the pre-aging treatment comprises isothermal pre-aging treatment and cooling pre-aging treatment that are sequentially carried out, a temperature of the isothermal pre-aging treatment is 70-100°C, and a time is 2-10 h; and a winding temperature of the cooling pre-aging treatment is 75-95°C, and a cooling rate is ≤3°C/h.

14. A 6XXX series aluminum alloy sheet for a door inner panel, prepared by the preparation method according to any one of claims 1 to 13.

15. An application of the 6XXX series aluminum alloy sheet for a door inner panel according to claim 14 in the field of door inner panels of automobiles.
